# EUROPÄISCHE PATENTSCHRIFT

(11) **EP 4 627 424 B1**
(45) Veröffentlichungstag und Bekanntmachung des Hinweises auf die Patenterteilung: **14.10.2026**
(21) Anmeldenummer: 23801356.9
(22) Anmeldetag: 02.11.2023
(51) Int. Cl.: G05D 23/19

(54) **COMPUTERIMPLEMENTIERTES VERFAHREN ZUR STEUERUNG UND/ODER REGELUNG EINER EIN-KOMPRESSOR-STATION MIT EINEM KOMPRESSOR**
COMPUTER-IMPLEMENTED METHOD FOR OPEN-LOOP AND/OR CLOSED-LOOP CONTROL OF A SINGLE-COMPRESSOR STATION HAVING A COMPRESSOR
PROCÉDÉ MIS EN ?UVRE PAR ORDINATEUR POUR COMMANDE À BOUCLE OUVERTE ET/OU À BOUCLE FERMÉE D'UNE STATION À COMPRESSEUR UNIQUE COMPORTANT UN COMPRESSEUR

(30) Priorität: 02.12.2022 DE 102022132033
(43) Veröffentlichungstag der Anmeldung: 08.10.2025
(73) Patentinhaber: KAESER KOMPRESSOREN SE, 96450 Coburg (DE)
(72) Erfinder: WAGNER, Florian, 96450 Coburg (DE); SPRÜGEL, Tobias, 96450 Coburg (DE)
(74) Vertreter: Kirschner, Sebastian
(86) Internationale Anmeldenummer: PCT/EP2023/080594
(87) Internationale Veröffentlichungsnummer: WO 2024/115035

(56) Entgegenhaltungen:
- EP-A1- 3 974 918
- CN-A- 115 167 151
- US-B2- 9 133 851

## Beschreibung

Die Erfindung betrifft ein computerimplementiertes Verfahren zur Steuerung und/oder Regelung einer Ein-Kompressor-Station mit den Merkmalen des Oberbegriffes des Patentanspruches 1.

Es handelt sich hierbei um ein Verfahren zur optimalen Steuerung einer Ein-Kompressor-Station. Die Ein-Kompressor-Station besteht aus genau einem Kompressor und mindestens einem Druckluftspeicher. Der Druckluftspeicher kann durch einen Druckluftkessel gebildet sein. Anstelle eines herkömmlichen Druckluftkessels können ebenfalls Druckluftleitungen oder jede andere Art von Druckluftspeichern in Behältnissen dienen bzw. Mischformen ein wirksames Puffervolumen bilden.

Ein Ist-Druck und ein Ist-Betriebszustand werden erfasst. Durch die Ein-KompressorStation soll in einem Druckfluidsystem trotz ggf. auch schwankender Entnahme von Druckfluid aus dem Druckfluidsystem der Ist-Druck in einem Druckintervall zwischen einer Druckobergrenze und einer Druckuntergrenze gehalten werden. Es sollen somit zwei vorgegebene Druckgrenzen eingehalten werden.

Im Stand der Technik sind unterschiedliche Verfahren bekannt.

Seit Jahrzehnten ist die Verwendung von Druckschaltern üblich. Nach Unterschreiten eines vorgegebenen Mindestdrucks wird der Kompressor in Last geschaltet und liefert somit Luft. Beim Überschreiten eines vorgegebenen Maximaldrucks wird der Kompressor aus der Last geschaltet und liefert damit keine Luft. In welchem der drei Betriebszustände Stillstand, Leerlauf und Lastlauf der Kompressor sich konkret befindet, wird vom Druckschalter nur indirekt beeinflusst. Insbesondere kann der Druckschalter nicht explizit beeinflussen, ob der Kompressor sich im Stillstand oder im Leerlauf befindet, wenn der Kompressor aus der Last geschaltet wird. Auch berücksichtigt der Druckschalter nicht, dass beim Ausgeben eines Lastbefehls "Last" der Kompressor ggf. erst einen Motorstart mit einer Dauer von mehreren Sekunden bis 20 Sekunden durchführen muss, weshalb die Druckuntergrenze deutlich höher eingestellt werden muss, als der Druck, der im Druckluftspeicher tatsächlich nicht unterschritten werden darf. Dies führt zu einem erhöhten Durchschnittsdruck, der die Energieeffizienz negativ beeinflusst.

Das Verfahren wendet ein Gütekriterium zur Bewertung unterschiedlicher Steuerbefehle, d.h. unterschiedlicher Lastbefehle an. Das Gütekriterium wird durch einen Kostenwert angegeben. Dieses Gütekriterium kann beispielsweise der Energieaufwand sein, ggf. können zusätzlich weitere Optimierungskriterien berücksichtigt werden bzw. mehrere Aspekte in einem Einzelkriterium verrechnet werden. Es wird ein Zeitraster mit mehreren Schritten t0 bis tn (n>1) festgelegt, wobei ein Lastbefehl (LC) bestimmt und an den Kompressor übermittelt wird. Der übermittelte Lastbefehl wird durch eine Simulation von unterschiedlichen Lastbefehlen anhand eines Modells bestimmt.

Im Stand der Technik ist die Verwendung eines mathematischen Modells zur Untersuchung der zukünftigen Auswirkung der Lastbefehlkombinationen vorgeschlagen worden. Model Predictive Control (MPC) ist eine moderne Methode zur prädikativen Regelung von komplexen, in der Regel multi-variablen Prozessen. Bei der MPC wird ein zeitdiskretes dynamisches Modell des zu regelnden Prozesses verwendet, um das zukünftige Verhalten des Prozesses in Abhängigkeit von den Eingangssignalen zu berechnen. Dies ermöglicht die Berechnung des - im Sinne einer Gütefunktion - optimalen Eingangssignales, die zu optimalen Ausgangssignalen führen. Dabei können gleichzeitig Eingangs-, Ausgangs- und Zustandsbeschränkungen berücksichtigt werden. Dabei wird der untersuchte Zeithorizont in beispielsweise äquidistante diskrete Zeitabschnitte unterteilt. Eine Betrachtung von allen möglichen Folgen von selbst nur zwei Ansteuerbefehlen, wie "Last" bzw. "Nicht Last", im Rahmen eines sogenannten Brute-Force-Ansatzes funktioniert nicht bei hinreichend langen Prognosehorizont mit einer hinreichenden zeitlichen Auflösung der Schritte t0 bis tn, weil zu viele zu untersuchende Kombinationen von Lastbefehlen existieren, da der Lösungsraum exponentiell wächst, so dass eine Lösung der optimalen Ansteuerbefehle in Echtzeit nicht ermittelt werden kann. Wird beispielsweise ein Zeithorizont von t₀ bis t₆₀₀ in einem Intervall von 600 Sekunden mit einer zeitlichen Auflösung von 1 Sekunde untersucht, so ergeben sich 2⁶⁰⁰ unterschiedliche Folgen von Ansteuerbefehlen. Diese unglaubliche Menge an Ansteuerbefehlen kann im Rahmen eines Brute-Force-Ansatzes mit keiner Datenverarbeitungsanlage untersucht werden.

Um dieser Explosion bzw. Größe des Lösungsraums beim Brute-Force-Ansatz zu umgehen, ist ein anderer Lösungsansatz, die zeitliche Auflösung zu reduzieren. Anstelle von sekündlicher Auflösung wird eine Auflösung von beispielsweise Minuten verwendet. Durch diese Vereinfachung der Berechnung wird eine Folge von wenigen stationären Zuständen betrachtet, dynamische Vorgänge werden dabei außer Acht gelassen. Wenn hier wiederum ein Zeitraum von 600 Sekunden, d.h. 10 Minuten, aber mit einer zeitlichen Auflösung von 60 Sekunden betrachtet wird, ergibt sich eine zu untersuchende Folge von t0 bis t10 mit einer Größe des Lösungsraumes von 2¹⁰=1024 Ansteuerbefehlen. Diese geringe Anzahl an Ansteuerbefehlen lässt sich dann wiederum mit einem gewöhnlichen Optimierungsalgorithmus oder gar einem Brute-Force-Ansatz beherrschen. Der Preis für diese Komplexitätsreduktion besteht darin, dass dynamische Vorgänge nur eingeschränkt oder gar nicht berücksichtigt werden können. Für die Steuerung von Kompressoren in der Druckluftbranche ist diese Betrachtung von lediglich ausgeprägten stationären Zuständen nicht anwendbar, da es sich um dynamische Prozesse mit der Größenordnung von Sekunden handelt und damit für die korrekte Optimierung wesentliche Einflussgrößen in die Optimierungsrechnung nicht einfließen würden.

Aus der EP 3 974 918 A1 ist ein Verfahren zur Steuerung eines Druckluftsystems bekannt. Bei diesem Verfahren wird ein MPC-Verfahren dahingehend verändert, dass die zeitliche Auflösung über den zu untersuchenden Prognosehorizont dynamisch verändert werden kann. Hierbei wird nur ein kurzer Zeitraum mit zeitlich hoher Auflösung und hohem Detailgrad betrachtet. Anschließend wird das Ergebnis des betrachteten kurzen Zeitraums auf einen wesentlich längeren Zeitraum extrapoliert. In dem kurzen Zeitraum können somit auch dynamische Vorgänge betrachtet werden, in dem längeren Zeitraum nicht. Wenn bei der Druckluftverbrauchskurve viele Änderungen auftreten, erfolgt die Untersuchung genauer als wenn die Kurve wenig Änderungen aufweist. Dieses Verfahren soll eine gute Lösung in ausreichend schneller Zeit mit dem MPC-Verfahren finden.

Der Erfindung liegt die Aufgabe zugrunde, ein Verfahren zur Steuerung einer Ein-Kompressor-Station bereitzustellen, wobei das Gütekriterium und damit der Kostenwert optimiert und vorgegebene Randbedingungen mit hoher Wahrscheinlichkeit eingehalten werden. Bei bekannten technischen Eigenschaften der Ein-Kompressor-Station hängt die Güte nur von der Prognose des Druckluftverbrauchs ab. Bei einer idealen Prognose des Druckluftverbrauchs sollte das Gütekriterium tatsächlich optimiert werden.

Diese der Erfindung zugrunde liegende Aufgabe wird nun durch ein Verfahren mit den Merkmalen des Patentanspruches 1 gelöst. Dabei handelt es sich um ein computerimplementiertes Verfahren zur Steuerung und/oder Regelung einer Ein-Kompressor-Station mit einem Kompressor, wobei ein Ist-Druck und Ist-Betriebsstand des Kompressors erfasst wird, wodurch die Ein-Kompressor-Station in einem Druckfluidsystem trotz ggf. auch schwankender Entnahme von Druckfluid aus dem Druckfluidsystem der Ist-Druck in einem Druckinterwall zwischen einer Druckobergrenze und einer Druckuntergrenze gehalten werden soll, wobei ein Zeitraster mit mehreren Schritten t0 bis tn festgelegt wird, wobei ein Lastbefehl (LC) bestimmt und an den Kompressor übermittelt wird. Das Verfahren ist erfindungsgemäß dadurch gekennzeichnet, dass eine Baumstruktur mit Knoten in Form von simulierten Systemzuständen und Kanten in Form von simulierten Lastbefehlen gemäß den folgenden Verfahrensschritten a) und b) erstellt wird, wobei
a. zur Bestimmung des an den Kompressor zu übermittelnden Lastbefehls ausgehend vom Ist-Betriebszustand zum derzeitigen Zeitpunkt t0 für den nächsten Zeitpunkt t1 unterschiedliche Lastbefehle und die sich daraus ergebenden Systemzustände simuliert werden, wobei für die Systemzustände die zu erwartenden Ist-Drücke und Kostenwerte berechnet werden, wobei der jeweilige Kostenwert von der aufzuwendenden Energie abhängt, wobei die Systemzustände als ungültige Systemzustände und gültige Systemzustände klassifiziert werden, wobei zumindest die gültigen Systemzustände gespeichert werden, wobei für jeden gültigen Systemzustand dem jeweiligen zum Zeitpunkt t1 zu erwartenden Ist-Druck eine Systemzustandsdruckklasse zugeordnet und gespeichert wird, wobei für jeden gültigen Systemzustand ein zum Zeitpunkt t1 zu erwartender Steuerungszustand des Kompressors bestimmt und diesem zu erwartenden Steuerungszustand eine Steuerungszustandsklasse zugeordnet und gespeichert wird, wobei alle sich aus den simulierten Lastbefehlen ergebenden Systemzustände ausgewählt werden oder eine Teilmenge der sich aus den simulierten Lastbefehlen ergebenden Systemzustände ausgewählt wird, wobei für jeden für den Zeitpunkt t1 simulierten Systemzustand der simulierte Lastbefehl gespeichert wird,
b. wobei für die nächst folgenden Zeitpunkte ti+1 (i=1 ... n-1) ausgehend von den ausgewählten Systemzuständen des Zeitpunktes ti unterschiedliche Lastbefehle und die sich daraus ergebenden Systemzustände simuliert werden, wobei für die Systemzustände die zu erwartenden Ist-Drücke und Kostenwerte berechnet werden, wobei die Systemzustände als ungültige Systemzustände und gültige Systemzustände klassifiziert werden, wobei zumindest die gültigen Systemzustände gespeichert werden, wobei für jeden gültigen Systemzustand dem jeweiligen zum Zeitpunkt ti+1 zu erwartenden Ist-Druck eine Systemzustandsdruckklasse zugeordnet und gespeichert wird, wobei für jeden gültigen Systemzustand ein zum Zeitpunkt ti+1 zu erwartender Steuerungszustand des Kompressors bestimmt und diesem zu erwartenden Steuerungszustand eine Steuerungszustandsklasse zugeordnet und gespeichert wird, wobei für jeden zum Zeitpunkt ti+1 simulierten Systemzustand zumindest der ursprünglich zum Zeitpunkt t1 simulierte Lastbefehl gespeichert wird, wobei für jeden sich aus den simulierten Lastbefehlen ergebenden Systemzustand mit gleicher Systemzustandsdruckklasse und gleicher Steuerungszustandsklasse, mindestens derjenige Systemzustand mit dem geringsten Kostenwert als Knoten des Zeitpunktes ti+1 ausgewählt wird,
c. wobei aus allen zum Zeitpunkt tn ausgewählten Systemzuständen, derjenige Systemzustand mit dem geringsten Kostenwert bestimmt wird, wobei der zu diesem einzigen ausgewählten und bestimmten Systemzustand gespeicherte Lastbefehl des Zeitpunkts t1 als Lastbefehl an den Kompressor übermittelt wird.

Der reale Ist-Betriebszustand der Ein-Kompressorstation zum Zeitpunkt t0 kann durch unterschiedliche Zustandsgrößen beschrieben werden. Zu den Zustandsgrößen gehört der aktuelle Systemdruck p und/oder das aktuell im Druckluftspeicher gespeicherte Luftvolumen und/oder der aktuelle Umgebungsdruck. Die Zustandsgrößen umfassen ferner den Zustand des Kompressors, beispielsweise Stillstand, Leerlauf oder Lastlauf oder bei drehzahlvariablen Kompressoren die Drehzahlstufe des Kompressors. Ausgehend von dem realen Ist-Zustand und den Ist-Zustand beschreibenden Zustandsgrößen wird nun ein Graph in Form eines Baumes mit simulierten Systemzuständen für die folgenden Zeitpunkte t1 bis tn erzeugt.

Die simulierten Systemzustände werden durch die Zustandsgrößen und ggf. weitere Parameter beschrieben. Als Zustandsgröße wird mindestens der Betriebszustand des Kompressors verwendet. Der Systemzustand beschreibt den simulierten Zustand der Ein-Kompressor-Station. Dieser simulierte Zustand beinhaltet mindestens den simulierten Betriebszustand des Kompressors, z.B. Stillstand und Lastlauf, und eine abgeleitete Größe und kann weitere Randbedingungen beinhalten. Als abgeleitete Größe wird ein Ist-Druck in der Ein-Kompressor-Station verwendet. Als Zustandsgröße wird mindestens der Betriebszustand des Kompressors und der Ist-Druck verwendet. Eine weitere Randbedingung kann ein Timer sein, welcher angibt, wie lange sich der Kompressor bereits im simulierten Betriebszustand befindet. Eine weitere Randbedingung kann sein, welche Temperaturen im oder am Kompressor an bestimmten Stellen vorliegen, z.B. Temperatur des Öls im Ölkreislauf, Umgebungstemperatur am Aufstellungsort, Temperatur der Druckluft am Ende oder während dem Verdichtungsprozess. Beispiele für diese Charakterisierung finden sich in der Figurenbeschreibung.

Die Knoten des Baumes entsprechen den simulierten Systemzuständen. Die Knoten sind durch Kanten verbunden. Die die Knoten verbindenden Kanten entsprechen den simulierten Lastbefehlen. Durch die Anwendung des Lastbefehls im Modell wird der zeitlich darauffolgende Systemzustand simuliert.

Ausgehend von einer bestimmten Menge an Knoten bzw. Systemzuständen im aktuellen Zeitpunkt werden für einen darauffolgenden Zeitpunkt alle möglichen Lastbefehlkombinationen erzeugt. Im allerersten Zeitpunkt wird im Verfahrensschritt a. mit einem initialen Knoten begonnen. Mögliche Lastbefehlkombinationen sind beispielsweise "Last" oder "Nicht-Last". In einer weiteren Ausführung können auch drehzahlvariable Kompressoren unter zur Hilfenahme von Drehzahlstufen Berücksichtigung finden. Beispielsweise können dabei die Drehzahlen mit "nicht Last", Last bei 0%, 25%, 50%, 75% oder 100% definiert werden. Und so sechs verschiedene Lastbefehle simuliert werden.

Es wird in einem nächsten Schritt ein mathematisches Modell zur Berechnung von bestimmten Zustandsgrößen und/oder abgeleiteten Größen und/oder Parametern aufgerufen. Mit dem mathematischen Modell werden für alle erzeugten Lastbefehlkombinationen die zu erwartenden Ist-Drücke und weiteren Zustandsgrößen wie die aufzuwendende Energie und die sich ergebenden Zustände des Kompressors simuliert und gespeichert.

Aus den Zustandsgrößen werden die einzelnen Kostenwerte für die erzeugten Lastbefehle berechnet. Der jeweilige Kostenwert hängt insbesondere von der aufzuwendenden Energie ab. Der Kostenwert ist in einer Ausgestaltung eine mit einer aufzuwendenden Energie steigende Funktion. Der Kostenwert gibt mindestens an oder hängt davon ab, wie viel elektrische Energie durch den einen Kompressor in einem bestimmten Zeitbereich aufgenommen wird. Darüber hinaus können im Kostenwert weitere Kenngrößen Berücksichtigung finden. Es können jedoch auch weitere Zustandsgrößen mit in die Berechnung einfließen. Neber der reinen Energieeffizienz können im Gütekriterium, d.h. in dem Kostenwert darüber hinaus andere Aspekte Berücksichtigung finden, dies kann beispielsweise die Berücksichtigung eines Wärmerückgewinnungssystems sein. Im Modell zur Berechnung der Systemzustände wird dazu eine zurückgewonnene Wärme berücksichtigt, wobei der Kostenwert zusätzlich eine Funktion der zurückgewonnenen Wärme ist. Diese weiteren Kenngrößen können somit z.B. die Menge an rückgewinnbarer Wärme in einem bestimmten Zeitbereich sein. Werden neben der elektrischen Energie weitere Kenngrößen berücksichtigt, so müssen diese entsprechend kombiniert in dem Kostenwert verrechnet werden. Im Rahmen der Verrechnung der elektrischen Energie mit weiteren Kenngrößen können ebenfalls Gewichtungen einfließen, um weitere Kenngrößen in Abhängigkeit der elektrischen Energie weniger oder stärker einfließen zu lassen. Mittels dieser Gewichtungen ist es auch mögliche mehrere weitere Kenngrößen untereinander und im Bezug zur elektrischen Energie zu gewichten Ferner kann der Kostenwert zusätzlich eine Funktion zu erwartenden Verschleißes des Kompressors sein.

In dem Verfahren erfolgt ein Beschneiden des Baumes. Beim Aufspannen des Baumes bzw. des Graphen werden ggf. ungültige Systemzustände simuliert. Zum Beispiel hätte eine Lastbefehlkombination die Folge, dass die Druckuntergrenze oder Druckobergrenze verletzt wird. Dies hat zur Folge, dass dieser Knoten nicht als Ausgangspunkt für weitere Lastbefehlkombinationen im nächsten Zeitpunkt verwendet wird. Es folgt somit ein Abschneiden dieses Astes des Baumes. Hierdurch wird die Anzahl möglicher Lösungen und der Lösungsraum erheblich verringert, da mit dem Abschneiden dieses Astes auch alle aus diesem Ast abgeleiteten Lösungen nicht mehr weiter untersucht werden müssen.

Die Systemzustandsdruckklassen bestehen insbesondere aus einzelnen Druckintervallen, wobei die Druckintervalle aneinandergrenzen und nicht überlappen. Der zu erwartende Druckbereich deckt insbesondere den Bereich zwischen der Druckuntergrenze und der Druckobergrenze ab. Der zu erwartende Druckbereich deckt vorzugsweise ebenfalls Werte oberhalb der Druckobergrenze und unterhalb Druckuntergrenze ab. Es ist denkbar, dass die Systemzustandsdruckklassen aus gleich großen Intervallen zwischen der Druckobergrenze und der Druckuntergrenze bestehen. Es ist jedoch auch denkbar, dass die Intervalle eine unterschiedliche Größe aufweisen. Zusätzlich können jeweils ein oder mehrere Druckzustandsklassen für Druckwerte oberhalb der Druckobergrenze und unterhalb der Druckuntergrenze definiert werden. Es ist möglich, die Druckzustandsklassen über eine vom Druck abgeleitete Größe wie die im Druckluftspeicher gespeicherte Luftmasse bzw. Luftmenge zu definieren.

Die Steuerungszustand ergibt sich aus dem Betriebszustand des Kompressors. Der Betriebszustand kann insbesondere die Zustände "Lastlauf" und "Stillstand" umfassen. Ferner kann der Betriebszustand den Zustand "Leerlauf" umfassen. Ferner kann der Betriebszustand Lastzustände bei bestimmten Drehzahlen umfassen.

Dieser Betriebszustand des Kompressors kann auch als Kompressorzustand bezeichnet werden. Beispielsweise ob der Kompressor sich in dem Betriebszustand "Stillstand", "Leerlauf" oder "Lastlauf" befindet.

Die Steuerungszustandsklassen werden durch Diskretisierung der Steuerungszustände gebildet. Die Betriebszustände "Lastlauf" und "Stillstand" und Leerlauf bilden in einer Ausgestaltung diskrete Werte. Falls in einer anderen Ausgestaltung Lastzustände bei unterschiedlichen Drehzahlen möglich sind und somit simuliert werden, so kann die Drehzahl in Intervalle eingeteilt werden, um diskrete Steuerungszustandsklassen zu bilden.

Ferner wird vorzugsweise als Betriebszustand gespeichert, wie lange sich der Kompressor bereits in diesem Zustand ohne Zustandswechsel befindet.

Vorzugsweise wird dies über einen Timer gelöst, wobei die Timerwerte ebenfalls in Intervalle eingeteilt werden und so diskrete Steuerungszustandsklassen gebildet werden. Die Steuerungszustandsklasse weist einen Timer auf, wie lange der Kompressor bislang im aktuellen Zustand verweilt. Dieser Timer kann als Randbedingung für einen Zustandswechsel dienen, ob beispielsweise der Kompressor ausgeschaltet werden darf, ob eine minimal notwendige Nachlaufzeit im Leerlauf Zustand eingehalten wird oder ob im Leerlauf die minimale Zeit für den Druckaufbau erreicht worden ist und der Kompressor somit in den Zustand Last geschaltet werden kann. Der Timer wird vorzugsweise bei der Berechnung auf einen maximalen Wert begrenzt, auch wenn der Kompressor schon länger als der maximale Wert im aktuellen Zustand verweilt, um die möglichen Timerwerte zu begrenzen und damit die Steuerungszustandsklassen zu reduzieren.

Es werden im Verfahrensschritt a. entweder alle sich aus den simulierten Lastbefehlen ergebenden Systemzustände ausgewählt oder es wird eine Teilmenge der sich aus den simulierten Lastbefehlen ergebenden Systemzustände ausgewählt. Es ist davon auszugehen, dass bei der ersten Simulation der Lastbefehle für den Zeitpunkt t1 nur Systemzustände in unterschiedlichen Systemzustandsklassen erzeugt werden. Das heißt zunächst weist jede Systemzustandsklasse höchstens einen Systemzustand auf. Daher können hier zunächst alle Systemzustände ausgewählt werden. Es ist jedoch sinnvoll in bevorzugter Ausgestaltung des Verfahrens auch für den Zeitpunkt t1 zu überprüfen, ob in eine Systemzustandsklasse mehrere Systemzustände fallen und falls dies der Fall ist lediglich den mit dem geringsten Kostenwert auszuwählen. Dies ermöglicht es, dass die gleiche Überprüfung für alle Zeitpunkte t1 bis tn erfolgt.

Im Verfahrensschritt b. werden für die nächst folgenden Zeitpunkte ti+1 (i=1 ... n-1) ausgehend von den Knoten des Zeitpunktes ti, nämlich den sich aus den ausgewählten simulierten Lastbefehlen mit dem geringsten Kostenwert ergebenden Systemzuständen wiederum unterschiedliche Lastbefehle simuliert. Dies wird solange wiederholt bis der Zeitpunkt tn erreicht ist.

Für jeden sich aus den simulierten Lastbefehlen ergebenden Systemzustand mit gleicher Systemzustandsdruckklasse und gleicher Steuerungszustandsklasse und gleichem zu erwartenden Ist-Betriebszustand, wird in Verfahrensschritt b. derjenige Lastbefehl mit dem geringsten Kostenwert als Knoten ausgewählt. Wenn in eine Systemzustandsklasse mehrere Systemzustände fallen, wird mindestens derjenige mit dem geringsten Kostenwert weiterverfolgt. Es ist denkbar, dass lediglich derjenige Systemzustand mit dem geringsten Kostenwert oder mehrere Systemzustände, insbesondere die Systemzustände mit den geringsten Kostenwerten, ausgewählt werden. Diese ausgewählten Systemzustände werden weiterverfolgt.

Es ist denkbar, dass in Verfahrensschritt b. nicht alle ausgewählten Systemzustände betrachtet und nicht für alle ausgewählten Systemzustände des Zeitpunktes ti weitere Knoten im nächsten Zeitpunkt ti+1 erzeugt werden, wobei die ausgewählten Systemzustände nach dem Kostenwert sortiert und nur für die Systemzustände mit den geringsten Kostenwerten die weiteren Systemzustände für den nächsten Zeitpunkt ti+1 erzeugt werden. Hierdurch wird die Anzahl der Systemzustände bzw. Knoten weiter reduziert, was die notwendige Rechenleistung und den Speicherdarf reduziert. Allerdings wird möglicherweise nicht mehr die optimale Lösung gefunden. Es ist beispielsweise denkbar, dass wenn die Anzahl der Systemzustände in einem Zeitpunkt größer als ein maximaler Wert wird nur 10 % bis 50% oder insbesondere 20 % der Systemzustandsklassen mit dem geringsten Kostenwert weiterverfolgt werden.

Vorzugsweise weisen benachbarte Zeitpunkte tj und tj+1 für j = 0 bis n-1 einen äquidistanten Abstand auf. Benachbarte Zeitpunkte tj und tj+1 für j = 0 bis n-1 können insbesondere einen äquidistanten Abstand von weniger als 10 Sekunden haben und mehr als 0,001 Sekunden, um auch dynamische Vorgänge abzubilden. In bevorzugter Ausgestaltung beträgt der Abstand zwischen benachbarten Zeitpunkte tj und tj+1 0,01 Sekunden bis 2 Sekunden.

Aus allen zum Zeitpunkt tn ausgewählten Knoten wird derjenige Systemzustand aller Systemzustandsklassen mit dem geringsten Kostenwert ausgewählt, wobei der zu diesem einzigen ausgewählten Systemzustand gespeicherte Lastbefehl des Zeitpunkts t1 als Lastbefehl (LC) an den Kompressor übermittelt wird.

Es ist denkbar, dass für jeden zum Zeitpunkt ti+1 simulierten Lastbefehl zumindest die anfänglich simulierten Lastbefehle zu den Zeitpunkten t1 ... tl gespeichert werden, wobei I>=2 ist. Es können beispielsweise die ersten 5 Lastbefehle gespeichert werden (I=5).

Da die Anzahl der Systemzustandsklassen von vornherein festgelegt ist und nur maximal ein Systemzustand pro Systemzustandsklasse weiterbetrachtet wird, ist ein exponentielles Wachstum des Lösungsraumes vermieden. Die Anzahl der Zeitpunkte kann insbesondere größer gleich 10 (n>=10), insbesondere größer gleich 20 sein (n >=20). Die Anzahl der Zeitpunkte ist dabei kleiner als 10.000.

Das Verfahren verwendet zwei Listen verwendet, nämlich eine erste Liste in der die vorherigen Systemzustände des Zeitpunktes tj gespeichert sind und eine zweite Liste, in der die ausgehend von den vorherigen Systemzuständen aufgrund der möglichen Lastbefehle neu simulierten Systemzustände zum Zeitpunkt tj+1 gespeichert sind, wobei wenn alle Systemzustände für den aktuellen Zeitpunkt tj+1 berechnet sind, aus dem Lösungsraum die ungültigen Systemzustände entfernt worden sind und eine Reduktion auf den Systemzustand mit dem geringsten Kostenwert in jeder vorhandenen Systemzustandsklasse durchgeführt worden ist, diese zweite Liste zur ersten Liste für den nächsten Zeitpunkt ti+1 deklariert wird. Die zweite Liste ersetzt die vormals erste Liste. Die zweite Liste dient dann als neue erste Liste. Die ursprünglich erste Liste wird gelöscht und eine neue zweite Liste erzeugt wird für den Zeitpunkt tj+2 erzeugt.

Das erfindungsgemäße Verfahren ermöglicht eine detaillierte Betrachtung über den gesamten Prognosezeitraum. Das Verfahren ist in Echtzeit anwendbar durch die Reduktion der zu untersuchenden Lastbefehlkombinationen auf einen handhabbaren Umfang. Es wird eine optimale Steuerung realisiert, da das Optimum des zugrunde liegenden Optimierungsproblems ermittelt wird. Die zwei wesentlichen Faktoren, die auf der Ermittlung des Optimums Einfluss haben können, ist die Feinheit der Diskretisierung der abgeleiteten Größe z.B. des Drucks und die Prognose des Druckluftverbrauchs. Das Verfahren kann bei ausreichender Rechenleistung direkt in eine Kompressorsteuerung oder auf einem anderen Rechner oder in der Cloud angewendet werden. Das Verfahren ist in einem Programmcode umgesetzt, der in dem Speicher einer Datenverarbeitungsanlage gespeichert ist und mittels eines Prozessors ausgeführt werden kann. Die Datenverarbeitungsanlage ist mit der Ein-Kompressor-Station drahtlos oder drahtgebunden verbunden und kann über die Verbindung den Steuerbefehl LC an die Ein-Kompressor-Station übermitteln.

Ein wesentlicher systematischer Vorteil des erfindungsgemäßen Verfahrens gegenüber der simulationsbasierten Steuerung von Druckluftstationen ist, dass bei herkömmlichen Verfahren Erfahrungswissen des Entwicklers des Verfahrens bei der Auswahl der angewendeten Heuristiken zur Ermittlung der zu simulierenden Schaltstrategien einfließen und damit die Güte in subjektiver Art und Weise direkt beeinflussen.

Bei dem erfindungsgemäßen Steuerungsverfahren sind die Heuristiken zur Ermittlung der zu simulierenden Schaltstrategien nicht mehr notwendig, denn im Rahmen der Optimierungsrechnung werden alle denkbaren Steuertrajektorien, welche jeweils der Umsetzung einer Schaltstrategie über den Prognosehorizont entsprechen implizit untersucht. Eine Vorauswahl ist nicht mehr notwendig. Damit hängt die Güte des Verfahrens nur noch von der Güte der Prognose des Druckluftverbrauchs und der Feinheit der Diskretisierung ab.

Es gibt nun eine Vielzahl von Möglichkeiten, das Verfahren auszugestalten und weiterzubilden. Hierzu darf zunächst auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung näher erläutert. In der Zeichnung zeigt:
- Fig. 1: in einer stark schematischen Darstellung einer Ein-Kompressor-Station,
- Fig. 2: ein stark schematische vereinfachtes Diagramm, in dem der Systemdruck über die Zeit aufgetragen ist,
- Fig. 3: ein Diagramm, das den Aufbau des Graphen mit jeweils zwei von jedem Knoten ausgehenden Kanten in Form von den Lastbefehlen "nicht Last" und "Last" beginnend beim Initialknoten zum Zeitpunkt t0 darstellt,
- Fig. 4: ein weiteres Diagramm mit dem Aufbau des Graphen, wenn mehr als zwei Kanten, das heißt mehr als zwei Lastbefehle pro Knoten simuliert werden,
- Fig. 5a: die Anzahl der Knoten aufgetragen über die Zeitstufen bei Anwendung eines Brute-Force-Ansatzes,
- Fig. 5b: die Anzahl der Knoten aufgetragen über die Zeitstufen bei dem erfindungsgemäßen Verfahren mit Berücksichtigung der Druckgrenzen und Diskretisierung des Systemdrucks,
- Fig. 5c: die Anzahl der Knoten aufgetragen über den Zeitstufen bei dem erfindungsgemäßen Verfahren mit Berücksichtigung der Druckgrenzen und Diskretisierung des Systemdrucks sowie zyklischer Reduktion der Klassen,
- Fig. 6: in einer stark schematischen Darstellung ein vereinfachtes mathematisches Modell zur Nachbildung des dynamischen Verhaltens der Ein-KompressorStation,
- Fig. 7: in einer schematischen Darstellung der Aufbau eines vereinfachten mathematischen Modells zur Nachbildung des dynamischen Verhaltens der Ein-Kompressor-Station unter Berücksichtigung eines Wärmerückgewinnungskreislaufes zur Nutzung der im Öl enthaltenen Wärme, welche bei der Verdichtung der Luft im Verdichterblock entsteht, sowie
- Fig. 8: ein weiteres Diagramm mit dem Aufbau des Graphen, wobei die Zusammenfassung von Knoten zu Systemzustandsklassen dargestellt ist.

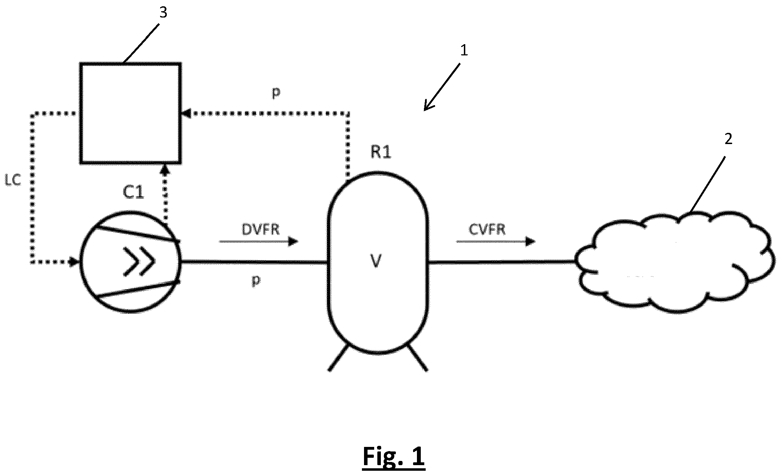

In Fig. 1 ist eine Ein-Kompressor-Station 1 dargestellt. Die Ein-Kompressor-Station 1 weist einen Kompressor C1 und einen Druckluftspeicher R1 auf. Der Druckluftspeicher R1 weist ein Volumen V auf. Ferner weist die Ein-KompressorStation 1 mindestens einen Druckluftverbraucher 2 auf. Ein Steuerungsalgorithmus 3 gibt einen Lastbefehl LC vor, wann der Kompressor C1 Luft liefern soll oder nicht und berücksichtigt dabei den einen Systemdruck p im Druckluftspeicher R1. In dem Steuerungsalgorithmus 3 sind Kenntnisse über die technischen Eigenschaften des Kompressors C1 umgesetzt worden. Der Steuerungsalgorithmus 3 kann insbesondere einen Liefervolumenstrom DVFR ermitteln. An die Druckluftverbraucher 2 wird der Druckluftstrom CVFR abgegeben. Die Differenz aus den Volumenströmen DVFR und CVFR bestimmt, wie sich die im Druckluftspeicher R1 gespeicherte Luftmenge verändert. Aus der gespeicherten Luftmenge und dem Volumen V des Druckluftspeichers R1 ergibt sich der Systemdruck p.

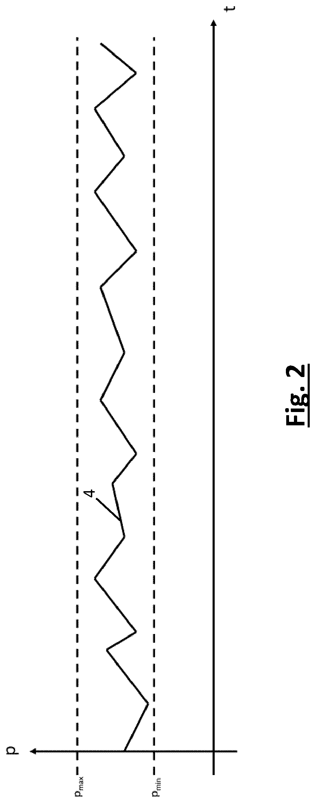

Anhand von Fig. 2 wird nun die Steuerungsaufgabe näher beschrieben. Fig. 2 zeigt den Systemdruck p aufgetragen über der Zeit t. Ferner ist eine Druckobergrenze pₘₐₓ und Druckuntergrenze pₘᵢₙ eingezeichnet. Die Druckobergrenze pₘₐₓ und die Druckuntergrenze pₘᵢₙ sind in diesem Beispiel über die Zeit konstant. Es ist denkbar, dass über die Zeit die Druckobergrenze pₘₐₓ und die Druckuntergrenze pₘᵢₙ variieren. Der durch die Druckkurve 4 beschriebene Systemdruck p soll nun oberhalb des mindestnotwendigen Drucks pₘᵢₙ und unterhalb des maximalzulässigen Drucks pₘₐₓ gehalten werden. Der Steuerungsalgorithmus 3 soll dazu eine Folge von Lastbefehlen, beispielsweise Last oder Nicht-Last für den Kompressor C1 ermitteln, wobei ein Kostenwert minimiert wird. Der Kostenwert hängt dabei insbesondere von der elektrisch aufzuwendenden Energie ab.

Voraussetzung für das Funktionieren des Verfahrens ist, dass der Steuerungsalgorithmus 3 die technischen Eigenschaften des Kompressors C1 kennt. Der Steuerungsalgorithmus 3 muss den aktuellen Zustand des Kompressors C1 kennen. Der Steuerungsalgorithmus 3 muss den aktuellen Druck p kennen. Der Steuerungsalgorithmus 3 kennt das wirksame Puffervolumen V und der Steuerungsalgorithmus 3 beeinflusst den Kompressor C1 über den Lastbefehl LC.

Der Steuerungsalgorithmus 3 ist in der Lage, den aktuellen und zukünftig erwarteten Druckluftverbrauch CVFR zu schätzen. In Abhängigkeit des Betriebszustandes des Systemdrucks p liefert der Kompressor C1 den Liefervolumenstrom DVFR in den Druckluftspeicher. In Abhängigkeit des Betriebszustandes und des Systemdruck p nimmt der Kompressor C1 die elektrische Leistung P auf. Die Druckluftverbraucher 2 entnehmen dem Druckluftspeicher R1 den Verbrauchsvolumenstrom CVFR. Die Differenz zwischen dem Liefervolumenstrom DVFR und dem Verbrauchsvolumenstrom CVFR bestimmt die Veränderung der im Druckluftspeicher R1 gespeicherten Luft. Die im Druckluftspeicher R1 gespeicherte Luft bestimmt den Systemdruck p.

Der grundlegende Zyklus des vorliegenden Verfahrens weist die folgenden Schritte auf. Es wird in einem ersten Schritt die Ist-Situation erfasst. In einem zweiten Schritt wird eine Prognose des Druckluftverbrauchs erstellt. Das Erstellen der Prognose des Druckluftverbrauchs ist dem Fachmann bekannt und wird an dieser Stelle nicht weiter beschrieben. Es wird nun in einem dritten Schritt eine Folge von Lastbefehlen über der Zeit ermittelt, wobei insbesondere eine Optimierungsrechnung durchgeführt wird.

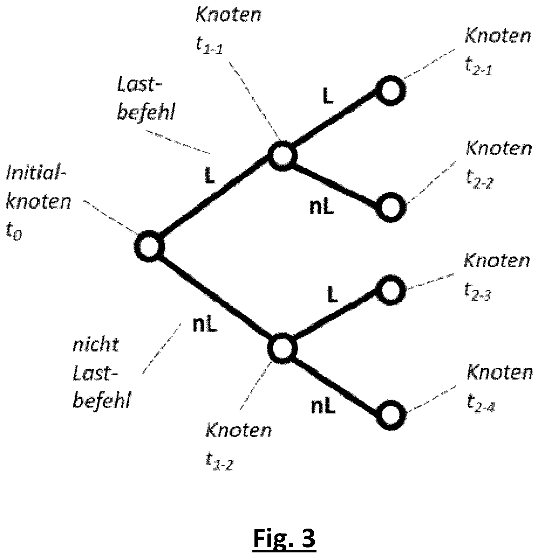

Hierbei wird eine optimale Folge von Lastbefehlen ermittelt. Diese optimale Folge von Lastbefehlen kann auch als Steuertrajektorie bezeichnet werden. In einem vierten Schritt wird nun der erste Lastbefehl der Steuertrajektorie, d.h. der Folge der Lastbefehle umgesetzt. Es wird nun das Ende des Zyklus abgewartet. Nach dem Ende des Zyklus wird wiederum mit dem ersten Schritt begonnen und die Verfahrensschritte 1 bis 4 werden erneut durchlaufen. Im Folgenden darf nun die Optimierungsrechnung näher beschrieben werden:
Es wird ein Graph, insbesondere ein Baum von Lastbefehlkombinationen aufgespannt. Ausgehend von einer bestimmten Menge an Knoten im aktuellen Zeitpunkt werden für ein darauf liegenden Zeitpunkt alle möglichen Lastbefehlkombinationen erzeugt. Im allerersten Zeitpunkt wird mit einem initialen Knoten begonnen. Dieses Vorgehen ist in Fig. 3 anhand von drei aufeinander folgenden Zeitpunkten t0, t1 und t2 dargestellt. Mögliche Lastbefehlkombinationen sind "L"-Lastbefehl oder "nL"-Nicht-Lastbefehl. Ausgehend von einem Initialknoten entstehen dadurch durch den Lastbefehl "L" der Knoten t1-1 und durch den Lastbefehl "nL" der Knoten t1-2. Ausgehend von den Knoten t1-1 entstehen wiederum die Knoten t2-1, t2-2 und ausgehend von dem Knoten t1-2 entstehen die Knoten t2-3 und t2-4 durch Anwendung der Lastbefehle "L" und "nL".

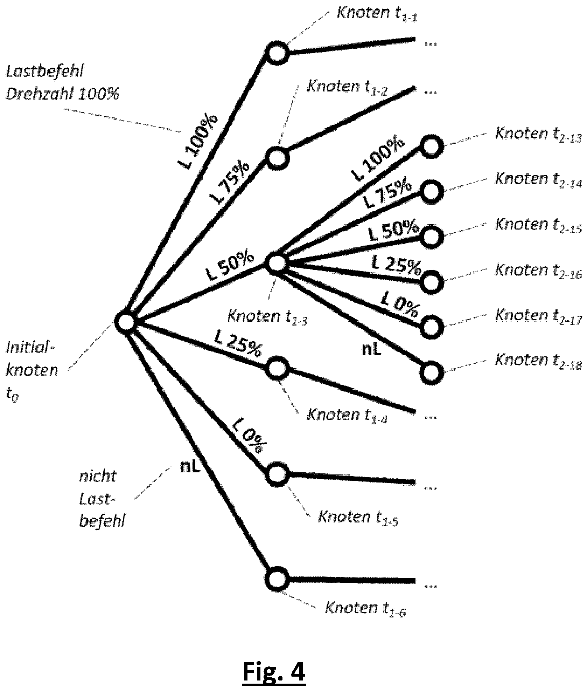

In einer weiteren Ausführung können auch drehzahlvariable Kompressoren unter zur Hilfenahme diskreter Drehzahlstufen Berücksichtigung finden. Dies ist in Fig. 4 dargestellt. Es wird in Fig. 4 die Drehzahl als Lastbefehl mit 0%, 25%, 50%, 75% oder 100% der Drehzahl definiert. Somit werden in diesem vereinfachten Beispiel einer möglichen Implementierung aus den beiden Lastbefehlen eines drehzahlstarren Kompressors mögliche Lastbefehle für ein drehzahlvariablen Kompressor. Hierbei entstehen aus dem Initialknoten t0 die Knoten t1-1, t1-2, t1-3, t1-4, t1-5 und t1-6 durch Anwendung der Lastbefehle "L 100%", "L 75%", "L 50%", "L 25%", "L 0%" und "nL".

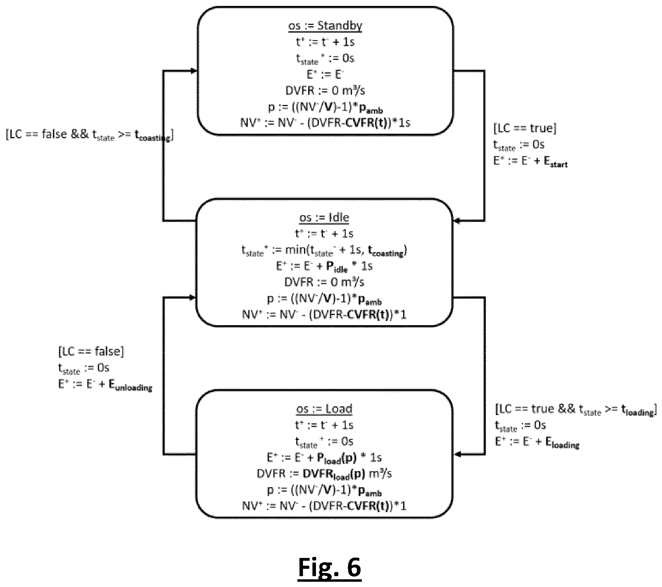

Es wird in einem nächsten Schritt ein mathematisches Modell zur Berechnung von bestimmten Zustandsgrößen und abgeleiteten Größen aufgerufen. Ein sehr stark vereinfachtes Modell der Ein-Kompressor-Station ist in Fig. 6 als hybrider Automat dargestellt. Beim hybriden Automaten werden die diskreten Zustandsgrößen als Automatenzustände modelliert, die über gerichtete Kanten miteinander verknüpft sind. Über die gerichteten Kanten wird definiert, welche Zustandsübergänge im System möglich sind und unter welchen Bedingungen ein Übergang stattfindet. In einem Automatenzustand beschreiben Differenzgleichen das Systemverhalten, wenn der Zustand aktiv ist. Bei einem Zustandswechsel ist es möglich, Zustandsgrößen zu initialisieren.

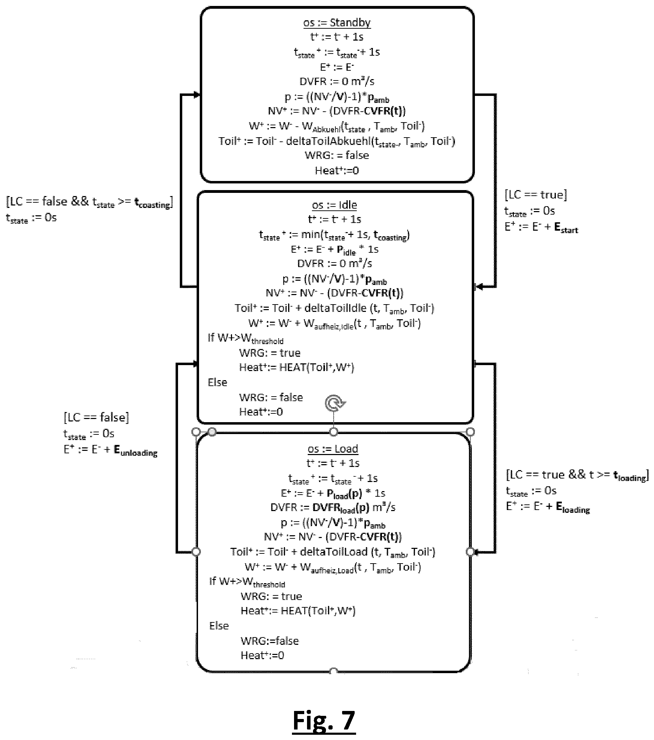

In Fig. 6 und 7 sind nun zwei Automaten dargestellt. Hierbei werden unterschiedliche Zustandsgrößen und Parameter verwendet.

Der Parameter P_{idle} beschreibt die Leerlaufleistung. P_{load}(p) beschreibt die Lastlaufleistung in Abhängigkeit des Drucks. T_{loading} beschreibt die Dauer für den Druckaufbau. T_{coasting} beschreibt die Leerlaufzeit. Eₛₜₐᵣₜ beschreibt die Schaltenergie für den Kompressorstart. E_{loading} beschreibt die Schaltenergie für den Druckaufbau. E_{unloading} beschreibt die Schaltenergie für den Druckabbau.

V bezeichnet das wirksame Puffervolumen. CVFR(t) bezeichnet den zeitabhängigen Druckluftverbrauch. "os" bezeichnet den Betriebszustand des Kompressors. "t" bezeichnet die Zeit seit Beginn der Berechnung. "tₛₜₐₜₑ" bezeichnet Zeit, die der Kompressor bereits im Betriebszustand verweilt. "E" beschreibt die aufgenommene elektrische Energie seit Beginn der Berechnung. "NV" beschreibt die im Druckluftspeicher gespeicherte Luft.

In Fig. 7 werden zusätzlich folgende Parameter verwendet:
Die Funktion W_{Abkuehl}(tₛₜₐₜₑ, T_{amb},Tₒᵢₗ⁻) beschreibt das Abkühlverhalten des Kompressors anhand eines Metamodells. Die Funktion W_{aufheiz}(tₛₜₐₜₑ, T_{amb},Tₒᵢₗ⁻) beschreibt das Aufheizverhalten des Kompressors anhand eines Metamodells.

Die Funktion deltaToilAbkuehl(tₛₜₐₜₑ, T_{amb}, Tₒᵢₗ⁻) beschreibt das Abkühlverhalten der Öltemperatur. Die Funktion deltaToilldle(tₛₜₐₜₑ, T_{amb}, Tₒᵢₗ⁻) beschreibt das Aufheizverhalten der Öltemperatur im Betriebszustand Leerlauf. Die Funktion deltaToiILoad(tₛₜₐₜₑ, T_{amb}, Tₒᵢₗ⁻) beschreibt das Aufheizverhalten der Öltemperatur im Betriebszustand Last. Die Zustandsgröße W beschreibt die Wärmemenge des Kompressors. Die Zustandsgröße "Heat" beschreibt die Menge an zurückgewinnbarer Wärme mittels eines Wärme-Rückgewinnungs-Kreislaufs (WRG-Kreislaufs).

Der in Fig. 6 dargestellte Automat unterscheidet die drei diskreten Zustände os = Standby (Stillstand), Idle (Leerlauf) und Load (Lastlauf). Befindet sich der Automat im diskreten Zustand Standby und liegt ein Lastbefehl LC = wahr bzw. true an, so findet ein Wechsel in den diskreten Zustand Idle statt. Variablen die mit "+" gekennzeichnet sind stellen die aktuellen Werte dar, mit einem "-" gekennzeichnete Variablen stellen die Werte aus dem vorigen Zeitpunkt dar. Zunächst wird in egal welchem Zustand die aktuelle Zeitvariable t⁺ um eine Sekunde oder den entsprechenden Zeitpunkt erhöht t⁺:=t⁻+1s. Im Beispiel beträgt der Zeitabschnitt, d.h. der Abstand zwischen benachbarten Zeitpunkten eine Sekunde. Es können auch andere Zeitabschnitte verwendet werden. Die Variable tₛₜₐₜₑ gibt an, wie lange sich der Kompressor bislang im Zustand Leerlauf befindet. Er wird dabei auf das Minimum der Werte tₛₜₐₜₑ- +1s und t_{coasting} gesetzt, wenn sich der Kompressor im Leerlauf befindet, andernfalls auf 0s. t_{coasting} gibt einen maximalen Wert für die Leerlaufzeit vor, der Kompressor kann sich zwar länger als die Zeit t_{coasting} im Leerlauf befinden, jedoch wird die Variable tₛₜₐₜₑ⁺ nicht weiter erhöht. Dies hilft die Anzahl der Zustände zu verringern.

Im Stillstand bleibt der Energieverbrauch konstant E⁺:=E⁻. Im Leerlauf wird der der Energieverbrauch um die Leerlaufleistung P_{idle} mal den Zeitabschnitt von 1s erhöht E⁺:=E⁻+P_{idle}*1s. Im Lastlauf wird der Energieverbrauch um die Lastaufleistung P_{load} mal den Zeitabschnitt von 1s erhöht E⁺:=E⁻+P_{load}*1s.

Der Druck p berechnet sich aus dem im Druckluftspeicher R1 gespeichertem Luftvolumen NV und dem Umgebungsdruck wie folgt p:=((NV⁻/V)-1)*p_{amb}. Das im Druckluftspeicher R1 gespeicherte Luftvolumen NV wird wie folgt berechnet: NV⁺:=NV⁻ -(DVFR-CVFR(t))*1s.

Der Liefervolumenstrom DVFR ist gleich 0m³/s in Stillstand und im Leerlauf. Im Zustand Leerlauf benötigt der Kompressor in jedem Zeitpunkt die Leerlaufleistung P_{Idle}. Die produzierte Druckluftmenge ist weiterhin 0 Kubikmeter pro Sekunde, da das Einlassventil des Kompressors geschlossen ist und dieser keine Druckluft an das angeschlossene Druckluftnetz abgeben kann, da das Mindestdruckrückschlagventil aufgrund der Druckdifferenz zwischen dem internen Druck und Systemdruck geschlossen ist. Im Lastlauf ist der Liefervolumenstrom vom Systemdruck p abhängig.

In diesem vereinfachten Modell werden die drei Zustände des Kompressors (Stillstand, Leerlauf und Lastlauf) mittels bestimmter Umschaltbedingungen verbunden. Dies ermöglicht den Wechsel von einem Betriebszustand in einen anderen, sofern die Umschaltbedingungen erfüllt sind.

Wenn im Zustand "standby" der Lastbefehl auf LC==true gesetzt wird, wird in den Leerlauf-Zustand gewechselt. Beim Wechsel vom diskreten Zustand Standby in den diskreten Zustand Idle wird die Zustandsgröße tₛₜₐₜₑ mit dem Wert 0 initialisiert und der Energiezähler um den Wert Eₛₜₐᵣₜ erhöht E⁺ :=E⁻+Eₛₜₐᵣₜ. Der Wert Eₛₜₐᵣₜ gibt an, wie groß die aufzuwendende Energie ist um den Kompressor zu starten.

Ein Wechsel vom Zustand "idle" in den Zustand "load" erfolgt nur, wenn der Lastbefehl LC==true ist und die vorgegebene Leerlaufzeit t_{loading} erreicht ist, d.h. tₛₜₐₜₑ>=t_{loading} **ist.** Die Leerlaufzeit wird sodann auf 0 gesetzt und die Energie um die Leerlaufenergie E_{loading} erhöht, E⁺:=E⁻+E_{loading}.

Ein Wechsel vom Zustand "load" zum Zustand "idle" erfolgt, wenn der Lastbefehl aufgehoben wird (LC==false). Die Variablen tₛₜₐₜₑ wird auf 0s gesetzt und die Energie um den Wert E_{unloading} erhöht. Die Schaltenergie für den Druckabbau wird über den Parameter E_{unloading} berücksichtigt.

Ein Wechsel vom Zustand "idle" in den Zustand "standby" erfolgt, wenn LC==false ist und tₛₜₐₜₑ>= t_{coasting} ist.

Das in Fig. 6 dargestellte Modell kann erweitert werden, um weitere relevante Kenngrößen, wie etwa die Temperatur des Öls, um die Auf- und Abkühlvorgänge des Kompressors abzubilden.

Hierzu sind in Fig. 7 die Variablen W*, Toil, WRG und Heat ergänzt worden. Die Berechnung ergibt sich wie folgt:
WRG (Wärmerückgewinnung) beschreibt die Fähigkeit, ob Wärmerückgewinnung genutzt werden kann oder nicht. Im Standbyzustand des Kompressors kann keine Wärmerückgewinnung erfolgen. Dies liegt darin begründet, dass der Ölkreislauf im Standbyzustand nicht mehr aktiv ist und somit kein Öl durch die Wärmetauscher der Wärmerückgewinnung gefördert werden kann. Demzufolge ist auch die nutzbare Wärmemenge HEAT⁺, die über das WRG-System abgeführt werden kann gleich Null.

Im Standbyzustand erfolgt keine Verdichtung von Luft und es wird auch keine Wärme während der Verdichtung an das Öl abgegeben. Folglich sinkt die Temperatur des Öls im Ölkreislauf des Kompressors Tₒᵢₗ. Diese Abkühlung geschieht verhältnismäßig langsam und kann durch eine Abkühlfunktion (deltaToilAbkuehl) als Funktion in Abhängigkeit von der Verweildauer im Zustand Standby tₛₜₐₜₑ, der Umgebungstemperatur T_{amb} und der Öltemperatur im zurückliegenden Zeitpunkt Tₒᵢₗ⁻ abgebildet werden. Entsprechend kann auch die gespeicherte Wärmmenge im Kompressor W in Abhängigkeit der Parameter tₛₜₐₜₑ, T_{amb} und Tₒᵢₗ⁻ durch eine Abkühlfunktion (W_{Abkuehl}) beschrieben werden. Die Verweildauer im Zustand Standby tₛₜₐₜₑ wird analog zu den beiden Zuständen Idle und Load modelliert und bei jedem Wechsel in den Zustand Standby mit 0s initialisiert.

Im Leerlaufzustand (Idle) kann der Anstieg der Öltemperatur Toil und die gespeicherte Wärmemenge W mit Funktionen (deltaToilldle, W_{aufheiz,Idle}) abgebildet werden, welche den Anstieg im Leerlauf modellieren. Wie Wärmerückgewinnung kann im Leerlaufzustand nur dann genutzt werden, wenn anlagenspezifisch eine gespeicherte Wärmemenge größer als ein bestimmter Schwellwert W_{threshold} vorliegt. Eine alternative Modellierung kann auch durch einen vorgegebenen Schwellwert für Tₒᵢₗ⁺ erfolgen. Sofern der Schwellwert überschritten wird kann Wärme zurückgewonnen werden WRG:=true und die Menge der abführbaren Wärme Heat⁺ kann mittels einer weiteren Funktion HEAT in Abhängigkeit der Öltemperatur und der Wärmemenge W⁺ im aktuellen Zeitpunkt ermittelt werden. Bei einer Unterschreitung des Schwellwerts kann keine Wärmerückgewinnung genutzt werden und die übertragbare Wärmemenge Heat⁺ ist gleich Null.

Im Lastzustand (Load) können die Größen Toil+, W+, WRG, Heat+ analog zum Betriebszustand Idle ermittelt werden. Es kommen jedoch eine andere Aufheizfunktion (deltaToilLoad) und eine andere Funktion zur Bestimmung der Wärmemenge W⁺ (W_{aufheiz,Load}) zum Einsatz.

Im Folgenden werden weitere Aspekte des Verfahrens erläutert:
In dem Verfahren erfolgt ein Beschneiden des Baumes. Beim Aufspannen des Baumes bzw. des Graphen werden ggf. ungültige Lastbefehlkombinationen simuliert bzw. ungültige Systemzustände erzeugt. Zum Beispiel hätte eine Lastbefehlkombination die Folge, dass die untere oder obere Druckgrenze verletzt wird. Dies hat zur Folge, dass dieser Knoten/Systemzustand nicht als Ausgangspunkt für weitere Lastbefehlkombinationen im nächsten Zeitpunkt verwendet wird. Es folgt somit ein Abschneiden dieses Astes des Baumes. Hierdurch wird die Anzahl möglicher Lösungen und der Lösungsraum erheblich verringert, da mit dem Abschneiden dieses Astes auch alle aus diesem Ast abgeleiteten Lösungen nicht mehr weiter untersucht werden müssen. Die gültigen Systemzustände werden gespeichert. Die ungültigen Systemzustände müssen nicht gespeichert werden und können gelöscht werden, um Speicherplatz zu sparen.

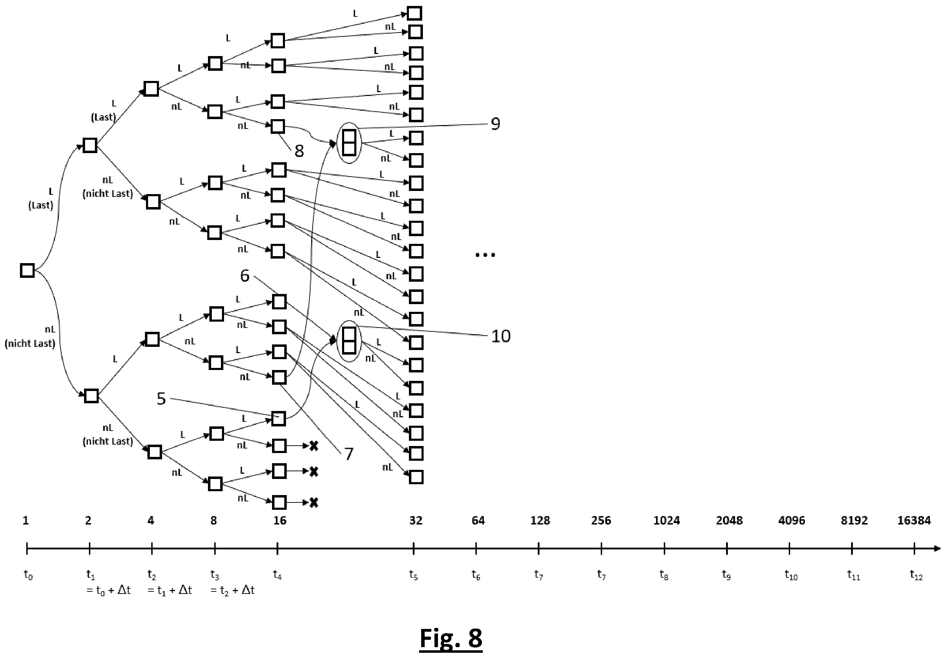

Um das exponentielle Wachsen des Lösungsraumes zu vermeiden, werden Knoten zusammengefasst, sofern diese einen vergleichbaren Systemzustand repräsentieren. Dieses Vorgehen ist in Fig. 8 für vier Knoten 5, 6, 7, 8 dargestellt. Aus diesen vier Knoten 5, 6, 7, 8 werden durch Zusammenfassen zwei Knoten 10, 9. Die Knoten 5, 6 beschreiben Systemzustände Last und die Knoten 7, 8 beschreiben Systemzustände nicht Last. Die Knoten 5, 6 werden dadurch zusammengefasst, dass nur der mit dem geringsten Kostenwert als neuer Knoten 10 weiterverfolgt wird. Die Knoten 7, 8 werden dadurch zusammengefasst, dass nur der mit dem geringsten Kostenwert als neuer Knoten 9 weiterverfolgt wird. Um dieses Ziel zu erreichen, bietet sich beispielsweise an, den Systemdruck in eine vorgegebene Anzahl an Diskretisierungsstufen zu unterteilen. Beispielsweise können Diskretisierungsstufen in Form von 0,02 Barschritten erfolgen. Die weiteren Variablen tstate, DVFR und NV können ebenso in Stufen eingeteilt werden. Diese Diskretisierungsstufen bilden die Systemdruckklassen. Unter dem zusammengefassten Knoten 5, 6 bzw. 7, 8 wird in bevorzugter Ausgestaltung nur der energetisch vorteilhafteste weiterverfolgt.

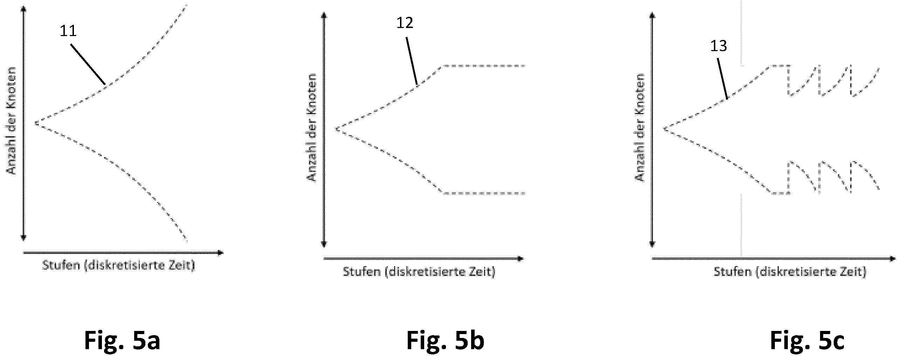

Der Unterschied zu einem Brute-Force-Ansatz aus dem Stand der Technik und dem erfindungsgemäßen Verfahren ist nun gut aus den Fig. 5a, 5b und 5c ersichtlich. Bei dem Brute-Force-Ansatz, der in Fig. 5a dargestellt ist, findet ein exponentielles Wachstum der Knotenanzahl 11 statt.

Bei dem erfindungsgemäßen Verfahren, wie es in Fig. 5b und 5c dargestellt ist, findet nur zu Beginn ein exponentielles Wachstum der Anzahl der Knoten statt. Dadurch dass die Maximalanzahl der Knoten durch die Systemzustandsklassen begrenzt ist, findet ab einem nicht näher bezeichneten Zeitpunkt kein Wachstum der Anzahl der Knoten 12 mehr statt. Somit kann das exponentielle Wachstum des Lösungsraumes in ein lineares Wachstum überführt werden.

In der Fig. 5c ist eine weitere Möglichkeit dargestellt, dass ferner eine zyklische Reduktion der Systemklassen vorgenommen wird, von denen aus dem nächsten Zeitpunkt die weiteren Ansteuerbefehle ausgehen. Dies hilft die Knotenanzahl 13 weiter zu verringern. Die Knotenreduktionen ergeben sich aus den folgenden Punkten.

Verletzt ein simulierter Lastbefehl eine obere oder eine untere Druckgrenze führt dies zur Beschneidung des Baumes und dieser Knoten wird nicht weiterverfolgt.

Den größten Einfluss hat die Diskretisierung der Zustandsgrößen. Durch die Diskretisierung des Systemdrucks können mehrere Knoten zu einem Knoten zusammengefasst werden und die weiteren Kombinationen müssen nur noch für diesen Knoten weiter untersucht werden. Ferner kann wie bereits erwähnt worden ist eine zyklische Reduktion der Knoten vorgenommen werden, in dem in einem exemplarischen Abstand von 20 Sekunden die Anzahl der Klassen zusätzlich anhand des Gütekriteriums reduziert werden. Das Gütekriterium wird durch die Kostenfunktion ausgedrückt. So können beispielsweise zu diesem Zeitpunkt nur noch 20% der verbleibenden Klassen weiterverfolgt werden. Die anderen Klassen mit ihren Knoten werden analog zu den Knoten im Fall der Beschneidung ebenfalls nicht mehr weiterverfolgt. Hierbei bietet es sich an, dass diejenigen 20% der Systemdruckklassen bzw. Systemzustandsklassen weiterverfolgt werden, die zu diesem Zeitpunkt den günstigsten Kostenwert haben. Die anderen Klassen mit ihren Knoten werden analog zu den Knoten im Falle der Beschneidung ebenfalls nicht mehr weiterverfolgt.

In einer anderen weiteren Ausgestaltung können neben der rein energetischen Betrachtung auch noch weitere Einflussgrößen in dem Kostenwert Berücksichtigung finden. So kann ebenfalls die rückgewinnbare Wärmeleistung des Kompressors ermittelt werden.

Hierfür bietet sich die Modellierung mittels analytischer Gleichungen an oder sofern diese eine erhebliche Erhöhung der Rechenzeit des Modells erzeugen würden, eine metamodellbasierte Optimierung an. Hierbei werden Zusammenhänge zwischen Größen mittels geeigneten Metamodellen vor der eigentlichen Optimierung angelernt. Diese Metamodelle können Antwortflächen mit linearen, quadratischen oder kubischen Ansatzfunktionen, künstliche neuronale Netze, Support Vektor Regression, Gaußprozesse etc. verwenden.

Mit dem Erreichen der letzten Stufe des Baumes ist bekannt, welcher Knoten zur optimalen Lösung des gestellten Optimierungsproblems führt. Gleichzeitig wurde der zeitlich gesehen erste Lastbefehl eines jeden Knotens auf der letzten Stufe durch das Verfahren durchgeschliffen, d.h. gespeichert. Somit kann der reale Kompressor mit dem ersten Lastbefehl der optimalen Lösung des Baumes angesteuert werden. Anschließend wird das gesamte Verfahren für den nun aktuellen Zeitpunkt erneut durchlaufen und erneut nach der optimalen Lösung gesucht. Dieses Vorgehen ist notwendig, da sich der Druckluftverbrauch innerhalb dieses einen Zeitabschnittes verändern kann und sich somit auch andere Druckluftverbräuche für den untersuchten Zeithorizont ergeben. Dies hat zur Folge, dass sich die Randbedingung des Optimierungsproblems grundlegend verändern. Ein typischer Zeithorizont liegt beispielsweise bei 10 Minuten. Es kann beispielsweise der Zeithorizont von 10 Minuten mit einer zeitlichen Auflösung von 0,1 Sekunde bis 5 Sekunden, insbesondere 1 Sekunde, betrachtet werden.

### Bezugszeichenliste:

- 1: Ein-Kompressor-Station
- 2: Druckluftverbraucher
- 3: Steueralgorithmus
- 4: Druckkurve
- 5: Knoten/Systemzustand
- 6: Knoten/Systemzustand
- 7: Knoten/Systemzustand
- 8: Knoten/Systemzustand
- 9: Knoten/Systemzustand
- 10: Knoten/Systemzustand
- 11: Knotenanzahl
- 12: Knotenanzahl
- 13: Knotenanzahl

## Patentansprüche

1. Computerimplementiertes Verfahren zur Steuerung und/oder zur Regelung einer Ein-Kompressor-Station mit einem Kompressor (C1), wobei ein Ist-Druck und ein Ist-Betriebszustand des Kompressors (C1) erfasst werden, wobei durch die Ein-Kompressor-Station in einem Druckfluidsystem trotz ggf. auch schwankender Entnahme von Druckfluid aus dem Druckfluidsystem der Ist-Druck in einem Druckintervall zwischen einer Druckobergrenze und einer Druckuntergrenze gehalten werden soll, wobei ein Zeitraster mit mehreren Zeitpunkten t0 bis tn festgelegt wird, wobei ein Lastbefehl (LC) bestimmt und an den Kompressor (C1) übermittelt wird,
**dadurch gekennzeichnet, dass**
eine Baumstruktur mit Knoten (5 bis 10) in Form von simulierten Systemzuständen und Kanten in Form von simulierten Lastbefehlen gemäß den folgenden Verfahrensschritten a) und b) erstellt wird, wobei
a. zur Bestimmung des an den Kompressor zu übermittelnden Lastbefehls (LC) ausgehend vom Ist-Betriebszustand zum derzeitigen Zeitpunkt t0 für den nächsten Zeitpunkt t1 unterschiedliche Lastbefehle und die sich daraus ergebenden Systemzustände simuliert werden, wobei für die Systemzustände die zu erwartenden Ist-Drücke und Kostenwerte berechnet werden, wobei der jeweilige Kostenwert von der aufzuwendenden Energie abhängt, wobei die Systemzustände als ungültige Systemzustände und gültige Systemzustände klassifiziert werden, wobei zumindest die gültigen Systemzustände gespeichert werden, wobei für jeden gültigen Systemzustand dem jeweiligen zum Zeitpunkt t1 zu erwartenden Ist-Druck eine Systemzustandsdruckklasse zugeordnet und gespeichert wird, wobei für jeden gültigen Systemzustand ein zum Zeitpunkt t1 zu erwartender Steuerungszustand des Kompressors bestimmt und diesem zu erwartenden Steuerungszustand eine Steuerungszustandsklasse zugeordnet und gespeichert wird, wobei alle sich aus den simulierten Lastbefehlen ergebenden Systemzustände ausgewählt werden oder eine Teilmenge der sich aus den simulierten Lastbefehlen ergebenden Systemzustände ausgewählt wird, wobei für jeden für den Zeitpunkt t1 simulierten Systemzustand der simulierte Lastbefehl gespeichert wird,
b. wobei für die nächst folgenden Zeitpunkte ti+1 (i=1 ... n-1) ausgehend von den ausgewählten Systemzuständen des Zeitpunktes ti unterschiedliche Lastbefehle und die sich daraus ergebenden Systemzustände simuliert werden, wobei für die Systemzustände die zu erwartenden Ist-Drücke und Kostenwerte berechnet werden, wobei die Systemzustände als ungültige Systemzustände und gültige Systemzustände klassifiziert werden, wobei zumindest die gültigen Systemzustände gespeichert werden, wobei für jeden gültigen Systemzustand dem jeweiligen zum Zeitpunkt ti+1 zu erwartenden Ist-Druck eine Sytemzustandsdruckklasse zugeordnet und gespeichert wird, wobei für jeden gültigen Systemzustand ein zum Zeitpunkt ti+1 zu erwartender Steuerungszustand des Kompressors bestimmt und diesem zu erwartenden Steuerungszustand eine Steuerungszustandsklasse zugeordnet und gespeichert wird, wobei für jeden zum Zeitpunkt ti+1 simulierten Systemzustand zumindest der ursprünglich zum Zeitpunkt t1 simulierte Lastbefehl gespeichert wird, wobei für jeden sich aus den simulierten Lastbefehlen ergebenden Systemzustand mit gleicher Systemzustandsdruckklasse und gleicher Steuerungszustandsklasse, mindestens derjenige Systemzustand mit dem geringsten Kostenwert als Knoten (5 bis 10) des Zeitpunktes ti+1 ausgewählt wird,
c. wobei aus allen zum Zeitpunkt tn ausgewählten Systemzuständen derjenige Systemzustand mit dem geringsten Kostenwert bestimmt wird, wobei der zu diesem einzigen ausgewählten und bestimmten Systemzustand gespeicherte Lastbefehl des Zeitpunkts t1 als Lastbefehl (LC) an den Kompressor (C1) übermittelt wird.

2. Verfahren nach Anspruch 1, **dadurch gekennzeichnet, dass** Systemzustände, deren zu erwartender Ist-Druck oberhalb der Druckobergrenze oder unterhalb der Druckuntergrenze liegt, als ungültig verworfen werden.

3. Verfahren nach Anspruch 1 oder 2, **dadurch gekennzeichnet, dass** in Schritt a. die Teilmenge der sich aus den simulierten Lastbefehlen ergebenden Systemzustände ausgewählt wird, indem für jeden sich aus den simulierten Lastbefehlen ergebenden Systemzustand mit gleicher Systemzustandsdruckklasse und gleicher Steuerungszustandsklasse, derjenige Systemzustand mit dem geringsten Kostenwert als Knoten ausgewählt wird.

4. Verfahren nach Anspruch 1 oder 2, **dadurch gekennzeichnet, dass** eine zurückgewonnene Wärme in einem Modell zur Simulierung der Systemzustände berücksichtigt wird, wobei der Kostenwert aus einer Funktion berechnet wird, wobei die Funktion zusätzlich die zurückgewonnene Wärme berücksichtigt.

5. Verfahren nach einem der vorstehenden Ansprüche, **dadurch gekennzeichnet, dass** in Verfahrensschritt b. für zumindest einen Zeitpunkt tk mit k >=2 und k<n die Systemzustandsklassen nach den Kostenwerten sortiert werden und nur für die Systemzustandsklassen mit den geringsten Kostenwerten die weiteren Systemzustandsklassen für den nächsten Zeitpunkt erzeugt werden.

6. Verfahren nach einem der vorstehenden Ansprüche, **dadurch gekennzeichnet, dass** benachbarte Zeitpunkte tj und tj+1 für j = 0 bis n-1 einen äquidistanten Abstand haben.

7. Verfahren nach einem der Ansprüche 1 bis 6, **dadurch gekennzeichnet, dass** benachbarte Zeitpunkte tj und tj+1 für j = 0 bis n-1 einen äquidistanten Abstand von weniger als 10 Sekunden und mehr als 0,001 Sekunden haben.

8. Verfahren nach einem der vorstehenden Ansprüche, **dadurch gekennzeichnet, dass** n>=10, insbesondere n >=20 ist und n<=10.000.

9. Verfahren nach einem der vorstehenden Ansprüche, **dadurch gekennzeichnet, dass** die Steuerungszustandsklasse in Abhängigkeit eines Timers tₛₜₐₜₑ zugeordnet wird, wobei der Timer tₛₜₐₜₑ angibt, wie lange der Kompressor mindestens schon im aktuell simulierten Kompressorzustand verweilt.

10. Verfahren nach Anspruch 9, **dadurch gekennzeichnet, dass** der Timer tₛₜₐₜₑ auf einen maximalen Wert begrenzt wird, auch wenn der Kompressor schon länger als der maximale Wert im aktuell simulierten Kompressorzustand verweilt.

11. Verfahren nach einem der vorstehenden Ansprüche, **dadurch gekennzeichnet, dass** für jeden zum Zeitpunkt ti+1 simulierten Systemzustand zumindest die anfänglich simulierten Lastbefehle zu den Zeitpunkten t1 ... tl gespeichert werden, wobei I>=2 und I<=10 ist, wobei aus allen zum Zeitpunkt tn ausgewählten Knoten, derjenige Systemzustand mit dem geringsten Kostenwert ausgewählt wird, wobei die zu diesem einzigen ausgewählten Systemzustand gespeicherten Lastbefehle t1 bis tl als Lastbefehle (LC) an den Kompressor übermittelt werden.

12. Verfahren nach einem der vorstehenden Ansprüche, **dadurch gekennzeichnet, dass** zwei Listen verwendet werden, nämlich eine erste Liste in der die vorherigen Systemzustände des Zeitpunktes tj gespeichert sind und eine zweite Liste, in der die ausgehend von den vorherigen Systemzuständen aufgrund der möglichen Lastbefehle neu simulierten Systemzustände zum Zeitpunkt tj+1 gespeichert sind, wobei wenn alle Systemzustände für den aktuellen Zeitpunkt tj+1 berechnet sind, aus dem Lösungsraum die ungültigen Systemzustände entfernt worden sind und eine Reduktion auf den Systemzustand mit dem geringsten Kostenwert in jeder vorhandenen Systemzustandsklasse durchgeführt worden ist, diese zweite Liste zur ersten Liste für den nächsten Zeitpunkt ti+1 deklariert wird, wobei die ursprünglich erste Liste gelöscht und eine neue zweite Liste erzeugt wird.

13. Verfahren nach einem der vorstehenden Ansprüche, **dadurch gekennzeichnet, dass** lediglich derjenige Systemzustand mit dem geringsten Kostenwert oder mehrere Systemzustände, insbesondere die Systemzustände mit den geringsten Kostenwerten, ausgewählt werden.

14. Verfahren nach einem der vorstehenden Ansprüche, **dadurch gekennzeichnet, dass** in Verfahrensschritt b. nicht alle ausgewählten Systemzustände betrachtet und nicht für alle ausgewählten Systemzustände des Zeitpunktes ti weitere Knoten im nächsten Zeitpunkt ti+1 erzeugt werden, wobei die ausgewählten Systemzustände nach dem Kostenwert sortiert und nur für die Systemzustände mit den geringsten Kostenwerten die weiteren Systemzustände für den nächsten Zeitpunkt ti+1 erzeugt werden.

## Claims

1. Computer-implemented method for open-loop and/or closed-loop control of a single-compressor station having a compressor (C1), wherein an actual pressure and an actual operating state of the compressor (C1) are recorded, wherein the single-compressor station is intended to maintain the actual pressure within a pressure fluid system within a pressure range between an upper pressure limit and a lower pressure limit, despite possible fluctuating extraction of pressure fluid from the pressure fluid system, wherein a time grid with multiple times t0 to tn is defined, wherein a load command (LC) is determined and transmitted to the compressor (C1),
**characterized in that**
a tree structure having nodes (5 to 10) in the form of simulated system states and edges in the form of simulated load commands is created according to the following method steps a) and b), wherein
a. to determine the load command (LC) to be transmitted to the compressor, starting from the actual operating state at the current time t0, for the next time t1, different load commands and the resulting system states are simulated, wherein the expected actual pressures and cost values are calculated for the system states, wherein the respective cost value depends on the energy to be expended, wherein the system states are classified as invalid system states and valid system states, wherein at least the valid system states are stored, wherein, for each valid system state, a system state pressure class is assigned to the respective actual pressure expected at the time t1 and stored, wherein, for each valid system state, an open-loop control state of the compressor expected at the time t1 is determined and an open-loop control state class is assigned to this expected open-loop control state and stored, wherein all system states resulting from the simulated load commands are selected or a subset of the system states resulting from the simulated load commands is selected, wherein the simulated load command is stored for each system state simulated at the time t1,
b. wherein, for the next times ti+1 (i=1 ... n-1), starting from the selected system states at the time ti, different load commands and the resulting system states are simulated, wherein the expected actual pressures and cost values are calculated for the system states, wherein the system states are classified as invalid system states and valid system states, wherein at least the valid system states are stored, wherein, for each valid system state, a system state pressure class is assigned to the respective actual pressure expected at the time ti+1 and stored, wherein, for each valid system state, an open-loop control state of the compressor expected at the time ti+1 is determined and an open-loop control state class is assigned to this expected open-loop control state and stored, wherein, for each system state simulated at the time ti+1, at least the load command originally simulated at the time t1 is stored, wherein, for each system state resulting from the simulated load commands with the same system state pressure class and the same open-loop control state class, at least the system state with the lowest cost value is selected as a node (5 to 10) at the time ti+1,
c. wherein the system state with the lowest cost value is determined from all system states selected at the time tn, wherein the load command stored for this single selected and determined system state at the time t1 is transmitted to the compressor (C1) as the load command (LC).

2. Method according to Claim 1, **characterized in that** system states whose expected actual pressure is above the upper pressure limit or below the lower pressure limit are rejected as invalid.

3. Method according to Claim 1 or 2, **characterized in that**, in step a., the subset of the system states resulting from the simulated load commands is selected by virtue of the system state with the lowest cost value being selected as the node for each system state resulting from the simulated load commands and having the same system state pressure class and the same open-loop control state class.

4. Method according to Claim 1 or 2, **characterized in that** a recovered heat is taken into account in a model for simulating the system states, wherein the cost value is calculated from a function, wherein the function additionally takes into account the recovered heat.

5. Method according to one of the preceding claims, **characterized in that**, in method step b., for at least a time tk where k>=2 and k<n, the system state classes are sorted according to the cost values and the additional system state classes are generated for the next time only for the system state classes with the lowest cost values.

6. Method according to one of the preceding claims, **characterized in that** adjacent times tj and tj+1 for j = 0 to n-1 are at an equidistant distance.

7. Method according to one of Claims 1 to 6, **characterized in that** adjacent times tj and tj+1 for j = 0 to n-1 are at an equidistant distance of less than 10 seconds and more than 0.001 seconds.

8. Method according to one of the preceding claims, **characterized in that** n>=10, in particular n>=20, and n<=10,000.

9. Method according to one of the preceding claims, **characterized in that** the open-loop control state class is assigned as a function of a timer tₛₜₐₜₑ, wherein the timer tₛₜₐₜₑ indicates how long the compressor has already been at least in the currently simulated compressor state.

10. Method according to Claim 9, **characterized in that** the timer tₛₜₐₜₑ is limited to a maximum value, even if the compressor has already been in the currently simulated compressor state for longer than the maximum value.

11. Method according to one of the preceding claims, **characterized in that**, for each system state simulated at the time ti+1, at least the initially simulated load commands are stored at times t1 ... tl, where l>=2 and l<=10, wherein the system state with the lowest cost value is selected from all nodes selected at the time tn, wherein the load commands t1 to tl stored for this single selected system state are transmitted to the compressor as load commands (LC).

12. Method according to one of the preceding claims, **characterized in that** two lists are used, specifically a first list in which the previous system states at the time tj are stored and a second list in which the system states newly simulated on the basis of the possible load commands at the time tj+1, starting from the previous system states, are stored, wherein, if all system states are calculated for the current time tj+1, the invalid system states have been removed from the solution space and there has been a reduction to the system state with the lowest cost value in each existing system state class, this second list is declared as the first list for the next time ti+1, wherein the original first list is deleted and a new second list is generated.

13. Method according to one of the preceding claims, **characterized in that** only that system state with the lowest cost value or a plurality of system states, in particular the system states with the lowest cost values, are selected.

14. Method according to one of the preceding claims, **characterized in that**, in method step b., not all selected system states are taken into account and further nodes are not generated at the next time ti+1 for all selected system states at the time ti, wherein the selected system states are sorted according to the cost value and the further system states for the next time ti+1 are generated only for the system states with the lowest cost values.

## Revendications

1. Procédé mis en œuvre par ordinateur pour la commande et/ou la régulation d'une station à compresseur unique avec un compresseur (C1), une pression réelle et un état de fonctionnement réel du compresseur (C1) étant détectés, la pression réelle devant être maintenue dans un intervalle de pression entre une limite supérieure de pression et une limite inférieure de pression par la station à compresseur unique dans un système de fluide sous pression malgré une fluctuation de prélèvement de fluide sous pression du système de fluide sous pression, une tranche de temps avec plusieurs moments t0 à tn étant définie, une instruction de charge (LC) étant définie et transmise au compresseur (C1),
**caractérisé en ce que**
une structure arborescente avec des nœuds (5 à 10) sous la forme d'états de système simulés et d'arêtes sous la forme d'instructions de charge simulées est créée selon les étapes de procédé suivantes a) et b),
a. pour définir l'instruction de charge (LC) à transmettre au compresseur, à partir de l'état de fonctionnement réel au moment présent t0 pour le moment suivant t1, différentes instructions de charge et les états de système en résultant étant simulés, les pressions réelles attendues et les valeurs de coût étant calculées pour les états de système, la valeur de coût respective dépendant de l'énergie à dépenser, les états de système étant classés en tant qu'états de système non valides et en tant qu'états de système valides, au moins les états de système valides étant mémorisés, pour chaque état de système valide, une classe de pression d'état de système étant associée à la pression réelle respective attendue au moment t1 et mémorisée, pour chaque état de système valide, un état de commande du compresseur attendu au moment t1 étant défini et une classe d'état de commande étant associée audit état de commande attendu et étant mémorisée, tous les états de système résultant des instructions de charge simulées étant sélectionnés ou un sous-ensemble des états de système résultant des instructions de charge simulées étant sélectionné, l'instruction de charge simulée étant mémorisée pour chaque état de système simulé pour le moment t1,
b. pour les moments suivants ti+1 (i=1 ... n-1), différentes instructions de charge et les états de système en résultant étant simulés en partant des états de système sélectionnés du moment ti , les pressions réelles et les valeurs de coût attendues étant calculées pour les états de système, les états de système étant classés comme des états de système non valides et des états de système valides, au moins les états de système valides étant mémorisés, une classe de pression d'état de système étant associée à la pression réelle respective attendue au moment ti+1 et mémorisée pour chaque état de système valide, un état de commande du compresseur attendu au moment ti+1 étant défini pour chaque état de système valide et une classe d'état de commande étant associée audit état de commande attendu et étant mémorisée, l'instruction de charge simulée à l'origine au moment t1 étant mémorisée pour chaque état de système simulé au moment ti+1, pour chaque état de système résultant des instructions de charge simulées avec la même classe de pression d'état de système et la même classe d'état de commande, au moins l'état de système avec la valeur de coût la plus faible étant sélectionné comme nœud (5 à 10) du moment ti+1,
c. l'état de système avec la valeur de coût la plus faible étant défini à partir de tous les états de système sélectionnés au moment Tn, l'instruction de charge, mémorisée pour ledit état de système sélectionné et défini unique, du moment t1 étant transmise en tant qu'instruction de charge (LC) au compresseur (C1).

2. Procédé selon la revendication 1, **caractérisé en ce que** des états de système, dont la pression réelle attendue est supérieure à la limite supérieure de pression ou inférieure à la limite inférieure de pression, sont rejetés comme non valides.

3. Procédé selon la revendication 1 ou 2, **caractérisé en ce que** dans l'étape a. le sous-ensemble des états de système résultant des instructions de charge simulées est sélectionné en sélectionnant l'état de système avec la valeur de coût la plus faible comme nœud pour chaque état de système résultant des instructions de charge simulées avec la même classe de pression d'état de système et la même classe d'état de commande.

4. Procédé selon la revendication 1 ou 2, **caractérisé en ce qu'**une chaleur récupérée est prise en compte dans un modèle de simulation des états du système, la valeur de coût étant calculée à partir d'une fonction, la fonction prenant en outre en compte la chaleur récupérée.

5. Procédé selon l'une des revendications précédentes, **caractérisé en ce que** dans l'étape de procédé b., les classes d'état de système sont triées en fonction des valeurs de coût pour au moins un moment tk avec k>=2 et k<n et seulement pour les classes d'état de système avec les valeurs de coût les plus faibles, les autres classes d'état de système sont générées pour le moment suivant.

6. Procédé selon l'une des revendications précédentes, **caractérisé en ce que** des moments adjacents tj et tj+1 pour j = 0 à n-1 présentent une distance équidistante.

7. Procédé selon l'une des revendications 1 à 6, **caractérisé en ce que** des moments adjacents tj et tj+1 pour j = 0 à n-1 ont une distance équidistante inférieure à 10 secondes et supérieure à 0,001 seconde.

8. Procédé selon l'une des revendications précédentes, **caractérisé en ce que** n > = 10, en particulier n > = 20 et n < = 10 000.

9. Procédé selon l'une des revendications précédentes, **caractérisé en ce que** la classe d'état de commande est associée en fonction d'un temporisateur tₛₜₐₜₑ, le temporisateur tₛₜₐₜₑ indiquant combien de temps le compresseur reste déjà dans l'état de compresseur actuellement simulé.

10. Procédé selon la revendication 9, **caractérisé en ce que** le temporisateur tₛₜₐₜₑ est limité à une valeur maximale, même lorsque le compresseur est resté dans l'état de compresseur simulé plus longtemps que la valeur maximale.

11. Procédé selon l'une des revendications précédentes, **caractérisé en ce que** pour chaque état de système simulé au moment ti+1, au moins les instructions de charge initialement simulées aux moments t1 ... tl sont mémorisées, l>=2 et l<=10, parmi tous les nœuds sélectionnés au moment tn, l'état de système avec la valeur de coût la plus faible étant sélectionné, les instructions de charge t1 à tl mémorisées pour ledit état de système sélectionné unique étant transmises au compresseur en tant qu'instructions de charge (LC).

12. Procédé selon l'une des revendications précédentes, **caractérisé en ce que** sont utilisées deux listes, à savoir une première liste, dans laquelle sont mémorisés les états de système précédents du moment tj, et une seconde liste, dans laquelle les états de système nouvellement simulés à partir des états de système précédents en raison des instructions de charge possibles sont mémorisés au moment tj+1, lorsque tous les états de système sont calculés pour le moment actuel tj+1, les états système non valides ayant été supprimés de la salle de solutions et une réduction à l'état système avec la valeur de coût la plus faible ayant été effectuée dans chaque classe d'état système existante, ladite seconde liste étant déclarée par rapport à la première liste pour le prochain moment ti+1, la première liste d'origine étant supprimée et une nouvelle seconde liste étant créée.

13. Procédé selon l'une des revendications précédentes, **caractérisé en ce qu'**uniquement l'état de système avec la valeur de coût la plus faible ou plusieurs états de système, en particulier les états de système avec les valeurs de coût les plus faibles, sont sélectionnés.

14. Procédé selon l'une des revendications précédentes, **caractérisé en ce que** dans l'étape de procédé b. tous les états de système sélectionnés ne sont pas pris en compte et d'autres nœuds ne sont générés pas dans le moment ti+1 suivant pour tous les états de système sélectionnés du moment ti, les états de système sélectionnés étant triés par valeur de coût et les états de système supplémentaires pour le prochain moment ti+1 étant générés uniquement pour les états de système avec les valeurs de coût les plus faibles.
